# EUROPEAN PATENT APPLICATION

(11) **EP 4 316 329 A1**
(43) Date of publication of application: **07.02.2024**
(21) Application number: 22787403.9
(22) Date of filing: 01.04.2022
(51) Int. Cl.: A47L 11/24, A47L 11/00, A47L 11/40

(54) **CHILD LOCK CONTROL METHOD AND APPARATUS, ROBOT, STORAGE MEDIUM, AND ELECTRONIC DEVICE**

(30) Priority: 15.04.2021 CN 202110408127
(71) Applicant: Beijing Roborock Innovation Technology Co., Ltd., Beijing 102206 (CN)
(72) Inventor: CONG, Yiming, Beijing 102206 (CN); XIAO, Fujian, Beijing 102206 (CN)
(74) Representative: Manitz Finsterwald Patent- und Rechtsanwaltspartnerschaft mbB
(86) International application number: PCT/CN2022/084894
(87) International publication number: WO 2022/218176

(57) **Abstract**

A child lock control method, a child lock control apparatus, a computer-readable storage medium, and an electronic device. The child lock control method is applied to a robot. The robot comprises at least one button. The child lock control method comprises: when the robot is in a charging state, receiving a child lock activation instruction; and according to the child lock activation instruction, turning off a button response corresponding to the button. The present disclosure may improve the use safety of a robot.

## Description

### CROSS-REFERENCE TO RELATED APPLICATION

This application claims priority of the Chinese Patent Application No. 202110408127.7 filed on April 15, 2021, the entire disclosure content of which is incorporated herein by reference in its entirety.

### TECHNICAL FIELD

The present disclosure relates to the field of robot control technologies, and more particularly, to a child lock control method, a child lock control apparatus, a robot, a computer-readable storage medium, and an electronic device.

### BACKGROUND

With the rapid development of science and technology, various robots have emerged to replace people in housework, such as sweeping robots, mopping robots, and vacuum cleaners.

Taking sweeping robots as an example, most of the current sweeping robots can first automatically return to a charging base for charging when the battery-power is low, and then reach a position where cleaning is stopped and continue cleaning after charging is completed. However, if a child accidentally touches the charging sweeping robot without the supervision of an adult, it may cause the sweeping robot to run or malfunction, resulting in a series of potential safety hazards.

It should be noted that the information disclosed in the background section is only used to enhance the understanding of the background of the present disclosure, and therefore may include information that does not constitute the prior art known to those of ordinary skill in the art.

### SUMMARY

The purpose of the present disclosure is to provide a child lock control method, a child lock control apparatus, a robot, a computer-readable storage medium, and an electronic device, thereby at least to a certain extent overcoming the issue of potential safety hazards in using a robot due to limitations and defects of related technologies.

According to a first aspect of the present disclosure, a child lock control method is provided, which is applied to a robot including at least one button. The child lock control method includes: receiving a child lock activation instruction when the robot is in a charging state; and turning off a button response corresponding to the button according to the child lock activation instruction.

According to a second aspect of the present disclosure, a child lock control apparatus is provided, which is applied to a robot including at least one button. The child lock control apparatus includes: an instruction receiving module, which is configured to receive a child lock activation instruction when the robot is in a charging state; and a child lock activation module, which is configured to turn off a button response corresponding to the button according to the child lock activation instruction.

In an embodiment of the present disclosure, the instruction receiving module may be configured to: acquire first voice information; receive the child lock activation instruction when the first voice information includes first preset voice information; and/or, if a child lock ON/OFF control in a mobile client is in an ON state, receive the child lock activation instruction sent by the mobile client.

In an embodiment of the present disclosure, the robot includes a preset button, and the preset button is configured to activate or deactivate a child lock function. The instruction receiving module may be configured to: in response to a first press operation on the preset button, determine a first press duration corresponding to the first press operation; and if the first press duration is greater than a duration threshold, determine the child lock activation instruction corresponding to the first press operation.

In an embodiment of the present disclosure, the child lock activation module may be configured to: turn off button responses corresponding to buttons other than the preset button according to the child lock activation instruction.

In an embodiment of the present disclosure, the child lock control apparatus may further include: an instruction determination module, which is configured to receive a child lock deactivation instruction after the child lock is activated; and a child lock deactivation module, which is configured to turn on the button response corresponding to the button according to the child lock deactivation instruction.

In an embodiment of the present disclosure, the instruction determination module may be configured to: acquire second voice information; and receive the child lock deactivation instruction when the second voice information includes second preset voice information.

In an embodiment of the present disclosure, the instruction determination module may be configured to: if the child lock ON/OFF control in the mobile client is in an OFF state, receive the child lock deactivation instruction sent by the mobile client.

In an embodiment of the present disclosure, the child lock control apparatus may further include: a duration determination module, which may be configured to determine a second press duration corresponding to a second press operation in response to the second press operation on the preset button after the child lock is activated; a duration comparison module, which is configured to determine the child lock deactivation instruction corresponding to the second press operation if the second press duration is greater than the duration threshold; and a response turn-on module, which is configured to turn on button responses corresponding to buttons other than the preset button according to the child lock deactivation instruction.

In an embodiment of the present disclosure, the instruction determination module may be configured to: receive the child lock deactivation instruction in response to a press operation on the reset button.

In an embodiment of the present disclosure, the child lock control apparatus may further include: a voice playing module, which may be configured to play a warning voice in response to a press operation on the button after the child lock is activated, the warning voice indicating that the press operation is invalid.

According to a third aspect of the present disclosure, a robot is provided. The robot includes the above-mentioned child lock control apparatus and at least one button.

According to a fourth aspect of the present disclosure, a computer-readable storage medium is provided. A computer program is stored on the computer-readable storage medium, and when executed by a processor, the computer program causes the above-mentioned child lock control method to be implemented.

According to a fifth aspect of the present disclosure, an electronic device is provided. The electronic device includes: one or more processors; and a storage apparatus, configured to store one or more programs. When executed by the one or more processors, the one or more programs cause the one or more processors to implement the above-mentioned child lock control method.

In the technical solutions provided by some embodiments of the present disclosure, firstly, when the robot is in the charging state, the child lock activation instruction is received; and then, the button response corresponding to the button is turned off according to the child lock activation instruction. On one hand, when the robot is in the charging state, potential safety hazards caused due to accidental touching by children or pets can be avoided, and the safety in use of the robot is improved. On the other hand, the robot according to the present disclosure receives the child lock activation instruction only when the robot is in the charging state, thereby avoiding the problem of button response failure during the robot's working process, and reducing the error rate of the robot's working process.

It is to be understood that both the foregoing general description and the following detailed description are exemplary and explanatory only, and are not restrictive of the present disclosure.

### BRIEF DESCRIPTION OF THE DRAWINGS

The accompanying drawings, which are incorporated in and constitute a part of this description, illustrate embodiments consistent with the present disclosure and together with the description serve to explain the principles of the present disclosure. Apparently, the drawings in the following description only show some embodiments of the present disclosure, and those skilled in the art can obtain other drawings according to these drawings without creative efforts. In the accompanying drawings:
FIG. 1 schematically shows an oblique view of a robot according to an exemplary embodiment of the present disclosure;
FIG. 2 schematically shows a flowchart of a child lock control method according to an exemplary embodiment of the present disclosure;
FIG. 3 schematically shows a flowchart of a child lock control method according to another exemplary embodiment of the present disclosure;
FIG. 4 schematically shows a principle diagram of a child lock control method in different states according to an exemplary embodiment of the present disclosure;
FIG. 5 schematically shows a block diagram of a child lock control apparatus according to an exemplary embodiment of the present disclosure;
FIG. 6 schematically shows a block diagram of a child lock control apparatus according to another exemplary embodiment of the present disclosure; and
FIG. 7 schematically shows a block diagram of an electronic device in an exemplary embodiment according to the present disclosure.

### DETAILED DESCRIPTION

Exemplary embodiments will now be described more thorough with reference to the accompanying drawings. Exemplary embodiments may, however, be implemented in various forms and should not be construed as being limited to the examples set forth herein. Rather, these embodiments are provided so that the present disclosure will be more thorough and complete, and will fully convey the concepts of the exemplary embodiments to those skilled in the art. The described features, structures, or characteristics may be combined in any suitable manner in one or more embodiments. In the following description, numerous specific details are provided to facilitate a thorough understanding of embodiments of the present disclosure. However, those skilled in the art will appreciate that the technical solutions of the present disclosure may be practiced without one or more of the specific details, or other methods, components, apparatuses, steps, etc. may be adopted. In other instances, well-known technical solutions have not been shown or described in detail to avoid obscuring aspects of the present disclosure.

Furthermore, the drawings are merely schematic illustrations of the present disclosure and are not necessarily drawn to scale. The same reference numerals in the drawings represent the same or similar parts, and thus their repeated description will be omitted. Some of the block diagrams shown in the drawings are functional entities and do not necessarily correspond to physically or logically separate entities. These functional entities may be implemented in software forms, or implemented in one or more hardware modules or integrated circuits, or implemented in different networks and/or processor apparatuses and/or microcontroller apparatuses.

It should be noted that, in the present disclosure, the terms "comprising" and "including" are used to indicate an open and inclusive meaning, and mean that there may be additional elements/components etc. in addition to the listed elements/components, etc. In addition, the terms "first" and "second" used in the present disclosure are only for the purpose of distinction and should not be used to limit the content of the present disclosure.

The flowcharts shown in the drawings are illustrative only and do not necessarily include all steps. For example, some steps may be decomposed, and some steps may be combined or partly combined, so the actual execution sequence may be changed according to the actual situations.

With the rapid development of artificial intelligence, sweeping robots have become one of the robots that can replace people in housework.

People often control the sweeping robot for cleaning by using buttons on the body of the sweeping robot or controls in a mobile client. The sweeping robot may also automatically return to a charging base for charging when it is idle or when the battery-power is low. At this time, the sweeping robot does not enter a shutdown state, so that it can continue to work after charging is completed. People may also set, in the mobile client, areas that need to be cleaned by the sweeping robot and areas that do not need to be cleaned. However, existing sweeping robots do not incorporate child locks, which cannot prevent children or pets from accidentally touching the sweeping robot and causing a series of potential safety hazards.

To address this problem, the present disclosure proposes a sweeping robot.

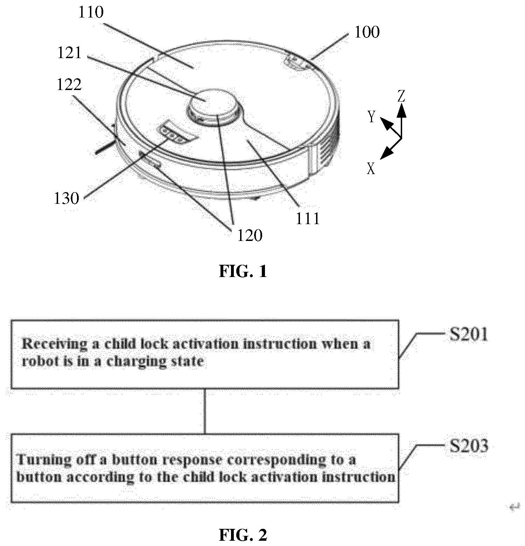

FIG. 1 schematically shows an oblique view of a robot according to an exemplary embodiment of the present disclosure. As shown in FIG. 1, the present disclosure takes a sweeping robot as an example for explanation. The sweeping robot may include a mobile platform 100, a perception system 120, and a human-computer interaction system 130.

The mobile platform 100 may be configured to automatically move along a target direction on an operation surface. The operation surface may be a surface to be cleaned by the sweeping robot. In some embodiments, the sweeping robot works on the ground, and the ground is the operation surface.

In some embodiments, the mobile platform 100 may be an autonomous mobile platform or a non-autonomous mobile platform. The autonomous mobile platform means that the mobile platform 100 itself can automatically and adaptively make operational decisions based on unexpected environmental inputs. The non-autonomous mobile platform itself cannot adaptively make operational decisions based on unexpected environmental inputs, but can execute established programs or run according to certain logic. Correspondingly, when the mobile platform 100 is the autonomous mobile platform, the target direction may be autonomously determined by the robot; and when the mobile platform 100 is the non-autonomous mobile platform, the target direction may be set by a system or manually. When the mobile platform 100 is the autonomous mobile platform, the mobile platform 100 includes a forward portion 111 and a rearward portion 110.

The perception system 120 includes a position determination device 121 located above the mobile platform 100, a buffer 122 located at the forward portion 111 of the mobile platform 100, and sensing devices located at the bottom of the mobile platform, such as a cliff sensor (not shown), an ultrasonic sensor (not shown), an infrared sensor (not shown), a magnetometer (not shown), an accelerometer (not shown), a gyroscope (not shown), and an odometer (not shown), which provide various position information and motion status information of a machine to a control system (not shown).

Each component in the perception system 120 may operate independently or together to achieve an intended function more accurately. The cliff sensor and the ultrasonic sensor are configured to identify the surface to be cleaned to determine the physical characteristics (surface material, cleanliness, etc.) of the surface to be cleaned, and may be combined with a camera, a laser distance sensor, etc. to make more accurate determinations.

For example, the ultrasonic sensor may be configured to determine whether the surface to be cleaned is a carpet. If the ultrasonic sensor determines that the surface to be cleaned is made of carpet material, the control system controls an automatic cleaning device to perform cleaning in a carpet mode.

In order to describe the operations of the sweeping robot more clearly, the following directions are defined. The sweeping robot may travel on the ground based on various combinations of movements relative to the following three mutually perpendicular axes defined by the mobile platform 100: a lateral axis x, a front-rear axis y, and a central vertical axis z. The forward driving direction along the front-rear axis y is designated as "forward", and the rearward driving direction along the front-rear axis y is designated as "rearward". The sweeping robot may rotate around the x-axis. It is a case of "pitch-up" when the forward portion of the sweeping robot is tilted up while the reward portion thereof is tilted down, and it is a case of "pitch-down" when the forward portion of the sweeping robot is tilted down and the reward portion thereof is tilted up. In addition, the sweeping robot may rotate around the z-axis. In the forward sweeping direction, it is a case of "turn-right" when the sweeping robot tilts to the right side of the y-axis, and it is a case of "turn-left" when the automatic cleaning device tilts to the left side of the y-axis.

The forward portion 111 of the mobile platform 100 is provided with the buffer 122. When the driving wheel assembly (not shown) pushes the sweeping robot to walk on the ground during a cleaning process, the buffer 122 monitors one or more events (or objects) in a traveling path of the sweeping robot through a sensor system, such as an infrared sensor. Based on the events (or objects) detected by the buffer 122, such as obstacles or walls, the sweeping robot may control a drive wheel assembly so that the automatic cleaning device is caused to respond to the events (or objects), such as moving away from an obstacle.

The human-computer interaction system 130 includes buttons on a host panel, which are used by a user to select functions. The system 130 may also include a display screen and/or an indicator light and/or a loudspeaker, which are configured to show a current state of the machine or functional selection items to the user. The system 130 may also include mobile client programs. For a path navigation robot, the mobile client may show the user a map of an environment where the robot is located, as well as a location of the robot, thereby providing the user with more abundant and humanized functional items. The number of buttons on the host panel will not be limited in the present disclosure.

The human-computer interaction system 130 may also include a voice receiving component (not shown), which may receive voice information sent by the user and determine instructions based on the voice information, so that the robot can perform operations corresponding to the instructions.

The sweeping robot may also include a reset button. The sweeping robot may respond to a press operation on the reset button, so as to shut down a task currently performed by the sweeping robot, and restore the sweeping robot to its initial settings.

It should be noted that in exemplary embodiments of the present disclosure, the child lock control method described below may be implemented by a robot (such as a sweeping robot or a mopping robot). That is to say, the steps of the child lock control method may be performed by the robot. In this case, a child lock control apparatus may be configured in the robot.

Next, each step of the child lock control method in exemplary embodiments will be described in more detail with reference to the drawings and embodiments.

FIG. 2 schematically shows a flowchart of a child lock control method in an exemplary embodiment of the present disclosure. In the following exemplification, a robot is illustrated exemplarily as an executive body for explanation. Referring to FIG. 2, the child lock control method may specifically include the following steps S201 and S203.

In step S201, a child lock activation instruction is received when the robot is in a charging state.

In an exemplary embodiment of the present disclosure, the child lock activation instruction may be a child lock activation instruction that is received by the robot and triggered by a user through the user's press operation on a button of a host panel; or the child lock activation instruction may also be a child lock activation instruction that is sent to the robot by a child lock ON/OFF control in a mobile client in response to a touch operation on the control.

According to an embodiment of the present disclosure, the robot may first acquire first voice information when the robot is in the charging state; and the child lock activation instruction is received if the first voice information includes first preset voice information.

In embodiments of the present disclosure, the first preset voice information may be words related to activation of a child lock that are pre-stored in the robot. For example, the first preset voice information may be words like "activate the child lock", "turn off a button response corresponding to the button", etc.

The first preset voice information may also be voice information autonomously inputted to the robot by the user. The voice information may include child lock activation information, adult voice timbre, robot identification, etc., where the robot identification may be a name, number, etc. of the robot.

When the robot is in the charging state, after acquiring the first voice information, the robot may first determine, based on comparison, whether the first voice information is a voice message sent by an adult or a child. In response to determining that the first voice information is a voice message sent by an adult, the child lock activation instruction may be received.

According to an embodiment of the present disclosure, when the robot is in the charging state, if the child lock ON/OFF control in the mobile client is in an ON state, the child lock activation instruction sent by the mobile client is received.

In embodiments of the present disclosure, the mobile client may include the child lock ON/OFF control, which may present a map of the environment where the robot is located and the location of the machine to the user. The shape of the child lock ON/OFF control will not be limited in the present disclosure. The child lock ON/OFF control may be configured to trigger the mobile client to send a child lock activation instruction or a child lock deactivation instruction to the robot.

According to an embodiment of the present disclosure, the robot includes a preset button. When the robot is in the charging state, firstly, in response to a first press operation on the preset button, the robot may determine a first press duration corresponding to the first press operation. Then, if the first press duration is greater than a duration threshold, the robot determines the child lock activation instruction corresponding to the first press duration.

In embodiments of the present disclosure, the preset button is configured to activate or deactivate a child lock function. The preset button may be a button on the host panel that is only configured to activate or deactivate the child lock function, or may be one of buttons on the host panel that corresponds to other button responses based on different press durations.

When the preset button is any one of the buttons on the host panel, the duration threshold may be set to be different from the press duration of any button for initiating a button response. The duration threshold may be greater than the press duration of any button for initiating a button response. Generally, the preset button is not a power on/off button or the reset button.

The first press duration may be a duration that is calculated by the robot between a time point when a touch on the preset button is started and a time point when the touch on the preset button is ended.

When the first press duration is greater than the duration threshold, the robot may receive the child lock activation instruction corresponding to the first press operation triggered by the user. When the first press duration is less than the duration threshold, the robot may control the preset button so as not to execute a button response process.

In step S203, the button response corresponding to the button is turned off according to the child lock activation instruction.

In embodiments of the present disclosure, the button response may indicate that after the user presses a button, the robot performs an operation in response to the press operation.

According to an embodiment of the present disclosure, when the robot includes the preset button, the robot may turn off button responses corresponding to buttons other than the preset button according to the child lock activation instruction.

The preset button may be a button on the host panel that is only configured to activate or deactivate the child lock function, or may be one of buttons on the host panel that corresponds to other button responses based on different press durations.

It should be noted that, when the preset button is one of buttons on the host panel that corresponds to other button responses based on different press durations, the robot may also turn off the button response of the preset button, and the child lock ON/OFF control of the mobile client may be configured to control the robot.

When the button response corresponding to the button is turned off, or after the child lock is activated, the robot may also play a voice message related to the successful activation of the child lock, so as to remind the user that the child lock has been activated. For example, after the robot activates the child lock, it will play the voice message indicating that the child lock is activated successfully and buttons have been locked.

In the present disclosure, when the robot is in the charging state, the robot receives the child lock activation instruction. Then, the button response corresponding to the button is turned off according to the child lock activation instruction, so as to avoid potential safety hazards caused due to accidental touching by children or pets, thereby improving the safety of the robot in use.

According to another embodiment of the present disclosure, the robot may also receive a child lock deactivation instruction after the child lock is activated, and turn on the button response corresponding to the button according to the child lock deactivation instruction.

In an exemplary embodiment of the present disclosure, the child lock deactivation instruction may be a child lock deactivation instruction that is received by the robot and triggered by the user through the user's press operation on the button of the host panel; or the child lock deactivation instruction may also be a child lock deactivation instruction that is sent to the robot by the child lock ON/OFF control in the mobile client in response to a touch operation on the control.

When the button response corresponding to the button is turned on, or after the child lock is deactivated, the robot may also play a voice message related to the successful deactivation of the child lock, so as to remind the user that the child lock has been deactivated. For example, after the robot deactivates the child lock, it will play the voice message indicating that the child lock is deactivated successfully and buttons have been unlocked.

According to another embodiment of the present disclosure, after the child lock is activated, the robot may first acquire second voice information; and then if the second voice information includes second preset voice information, the robot may receive the child lock deactivation instruction.

In embodiments of the present disclosure, the second preset voice information may be words related to deactivation of the child lock that are pre-stored in the robot. For example, the second preset voice information may be words like "deactivate the child lock", "turn on the button response corresponding to the button", etc.

The second preset voice information may also be voice information autonomously inputted to the robot by the user. The voice information may include child lock deactivation information, adult voice timbre, robot identification, etc.

After acquiring the first voice message, if the robot determines that the voice message is sent by an adult, it may receive the child lock activation instruction.

According to another embodiment of the present disclosure, after the child lock is activated, if the child lock ON/OFF control in the mobile client is in the OFF state, the child lock deactivation instruction sent by the mobile client is received.

In embodiments of the present disclosure, the child lock ON/OFF control may include two controls. One control may be configured to trigger the mobile client to send the child lock activation instruction to the robot. The other control may be configured to trigger the mobile client to send the child lock deactivation instruction to the robot. The child lock ON/OFF control may also be a single control, which is configured to trigger the mobile client to send the child lock activation instruction or the child lock deactivation instruction to the robot in different states.

According to another embodiment of the present disclosure, the robot includes a preset button. After the child lock is activated, in response to a second press operation on the preset button, the robot determines a second press duration corresponding to the second press operation. If the second press duration is greater than the duration threshold, the robot determines the child lock deactivation instruction corresponding to the second press operation; and based on the child lock deactivation instruction, the robot turns on button responses corresponding to buttons other than the preset button.

In embodiments of the present disclosure, the second press duration may also be a duration that is calculated by the robot between a time point when a touch on the preset button is started and a time point when the touch on the preset button is ended.

When the second press duration is greater than the duration threshold, the robot may receive the child lock deactivation instruction corresponding to the second press operation triggered by the user. When the second press duration is less than the duration threshold, the robot may control the preset button so as not to execute a button response process.

According to another embodiment of the present disclosure, after the child lock is activated, the robot may also receive the child lock deactivation instruction in response to a press operation on the reset button.

In embodiments of the present disclosure, the press operation on the reset button may be a long press operation on the reset button, or a short press operation on the reset button, which is not limited in the present disclosure.

According to another embodiment of the present disclosure, after the child lock is activated, a warning voice is played in response to a press operation on the button, which warning voice indicates that the press operation is invalid.

In embodiments of the present disclosure, the warning voice may be words like "the button has been locked, please unlock it", for example.

It should be noted that after the child lock is activated, the mobile client may show the user a map of an environment where a device is located and the location of the machine. The user may perform requirement settings on the mobile client according to the actual situations.

In the present disclosure, the robot receives the child lock activation instruction only when the robot is in the charging state, and turns off the button response corresponding to the button according to the child lock activation instruction, thereby avoiding the problem of button response failure during the robot's working process, and reducing the error rate of the robot's working process.

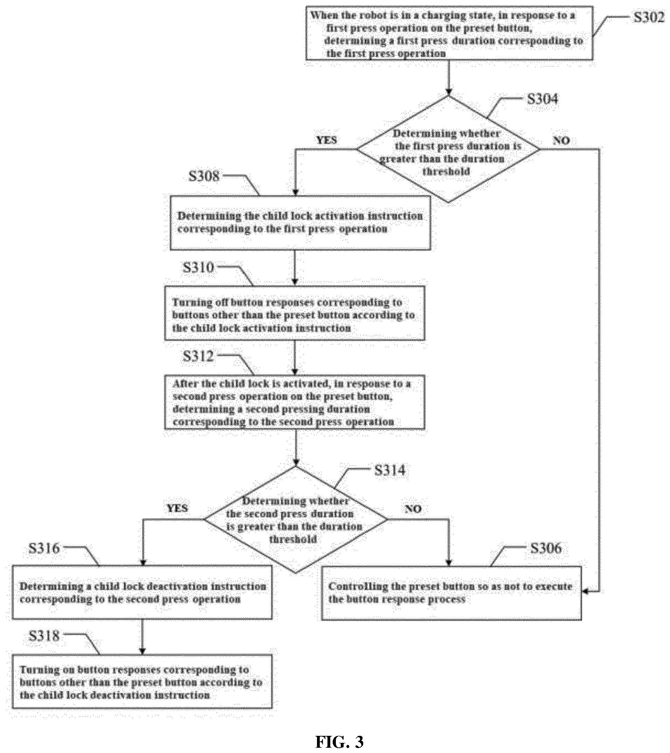

FIG. 3 schematically shows a flowchart of a child lock control method according to another exemplary embodiment of the present disclosure. The child lock control method is applied to a robot including a preset button. The specific child lock control method is as follows.

In step S302, when the robot is in a charging state, in response to a first press operation on the preset button, the robot may determine a first press duration corresponding to the first press operation. In step S304, it is determined whether the first press duration is greater than a duration threshold. If the first press duration is less than the duration threshold, step S306 is executed, where the preset button is controlled so as not to execute the button response process; otherwise, step S308 is executed. In step S308, the robot may determine the child lock activation instruction corresponding to the first press operation. In step S310, the robot may turn off button responses corresponding to buttons other than the preset button according to the child lock activation instruction. In step S312, after the child lock is activated, in response to a second press operation on the preset button, the robot may determine a second press duration corresponding to the second press operation. In step S314, it may be determined whether the second press duration is greater than the duration threshold. If the second press duration is less than the duration threshold, step S306 is executed, where the robot may control the preset button not to execute the button response process; otherwise, step S316 is executed. In step S316, a child lock deactivation instruction corresponding to the second press operation may be determined. In step S318, the robot may turn on button responses corresponding to buttons other than the preset button according to the child lock deactivation instruction.

In the present disclosure, the robot determines the press duration to avoid making the child lock activation or deactivation instruction effective without meeting the conditions for determining the child lock activation or deactivation instruction, thereby improving the accuracy and safety of the robot in use.

According to the child lock control method in another exemplary embodiment of the present disclosure, when the robot is in the charging state, the robot may first acquire the first voice information. When the first voice information includes the first preset voice information, the child lock activation instruction is received. After that, the second voice information is acquired. If the second voice information includes the second preset voice information, the child lock deactivation instruction may be received.

According to the child lock control method in another exemplary embodiment of the present disclosure, when the robot is in the charging state, if the child lock ON/OFF control in the mobile client is in the ON state, the robot may first receive the child lock activation instruction sent by the mobile client. Then, the button response corresponding to the button is turned off according to the child lock activation instruction. After the child lock is activated, if the child lock ON/OFF control in the mobile client is in the OFF state, the child lock deactivation instruction sent by the mobile client is received. Subsequently, the button response corresponding to the button is turned on according to the child lock deactivation instruction.

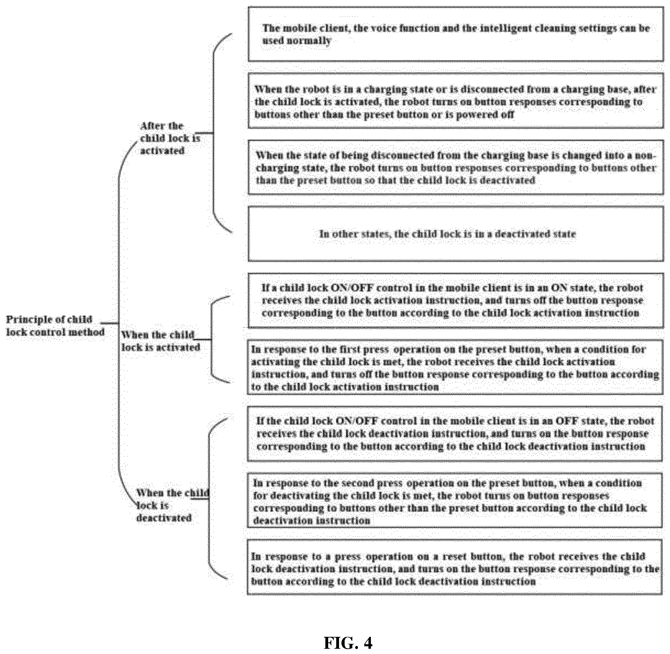

FIG. 4 schematically shows a principle diagram of the child lock control method in different states according to an exemplary implementation of the present disclosure. The method is specifically as follows.

After the child lock is activated, on one hand, the mobile client may display the map of the environment where the robot is located, the location of the robot, intelligent cleaning settings, etc., and the robot may also receive voice information sent by the user and perform tasks related to voice functions. On the other hand, when the robot is in a charging state or is disconnected from the charging base, after the child lock is activated, the robot may turn on button responses corresponding to buttons other than the preset button according to the child lock deactivation instruction, in response to a press operation on the preset button and the conditions for deactivating the child lock being met. At the same time, when the robot is in other states, the child lock is in a deactivated state.

When activating the child lock, one method may be adopted as follows: if the child lock ON/OFF control in the mobile client is in the ON state, the robot may receive the child lock activation instruction, and turn off the button response corresponding to the button according to the child lock activation instruction. Another method may be also adopted as follows: in response to the first press operation on the preset button, the robot may receive the child lock activation instruction when a condition for activating the child lock is met, and turn off the button response corresponding to the button according to the child lock activation instruction.

When deactivating the child lock, a first method may be adopted as follows: if the child lock ON/OFF control in the mobile client is in the OFF state, the robot may receive the child lock deactivation instruction, and turn on the button response corresponding to the button according to the child lock deactivation instruction. A second method may be also adopted as follows: in response to the second press operation on the preset button, the robot may turn on button responses corresponding to buttons other than the preset button according to the child lock deactivation instruction when a condition for deactivating the child lock is met. A third method may be also adopted as follows: in response to the press operation on the reset button, the robot may receive the child lock deactivation instruction, and turn on the button response corresponding to the button according to the child lock deactivation instruction.

In embodiments of the present disclosure, the condition for activating the child lock may be as follows: the first press duration corresponding to the first press operation is greater than the duration threshold. The condition for deactivating the child lock may be as follows: the second press duration corresponding to the second press operation is greater than the duration threshold.

In the present disclosure, the robot receives the child lock activation instruction only when the robot is in the charging state, and turns off the button response corresponding to the button according to the child lock activation instruction, thereby avoiding the problem of button response failure during the robot's working process, and reducing the error rate of the robot's working process.

It should be noted that although various steps of the methods in the present disclosure are depicted in a specific order in the drawings, it does not require or imply that these steps must be performed in that specific order, or that all of the illustrated steps must be performed to achieve the desired results. Additionally or alternatively, certain steps may be omitted, multiple steps may be combined into one step for execution, and/or one step may be decomposed into multiple steps for execution, etc.

Further, in an exemplary embodiment of the present disclosure, a child lock control apparatus is also provided.

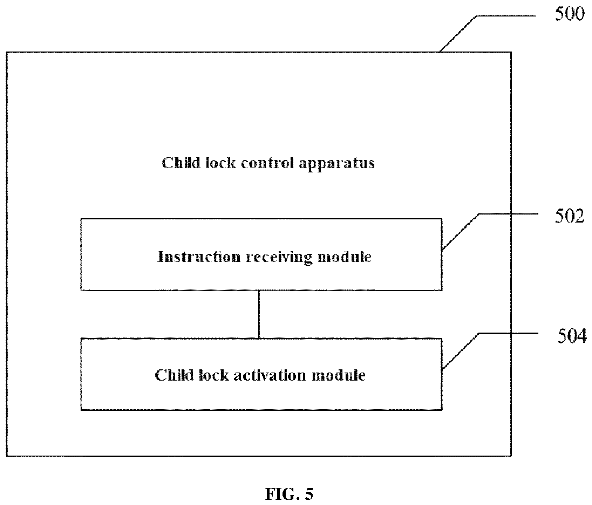

FIG. 5 schematically shows a block diagram of a child lock control apparatus according to an exemplary implementation of the present disclosure. Referring to FIG. 5, a child lock control apparatus 500 according to an exemplary embodiment of the present disclosure is applied to a robot including at least one button. The child lock control apparatus may include: an instruction receiving module 502 and a child lock activation module 504.

In embodiments of the present disclosure, the instruction receiving module 502 is configured to receive a child lock activation instruction when the robot is in a charging state; and the child lock activation module 504 is configured to turn off a button response corresponding to the button according to the child lock activation instruction.

According to another embodiment of the present disclosure, the instruction receiving module 502 may be configured to: acquire first voice information; and receive the child lock activation instruction when the first voice information includes first preset voice information.

According to another embodiment of the present disclosure, the instruction receiving module 502 may be configured to: if a child lock ON/OFF control in a mobile client is in the ON state, receive the child lock activation instruction sent by the mobile client.

According to another embodiment of the present disclosure, the robot includes a preset button, and the preset button is configured to activate or deactivate a child lock function. The instruction receiving module 502 may be configured to: determine a first press duration corresponding to a first press operation in response to the first press operation on the preset button; and determine the child lock activation instruction corresponding to the first press operation if the first press duration is greater than a duration threshold.

According to another embodiment of the present disclosure, the child lock activation module 504 may be configured to: turn off button responses corresponding to buttons other than the preset button according to the child lock activation instruction.

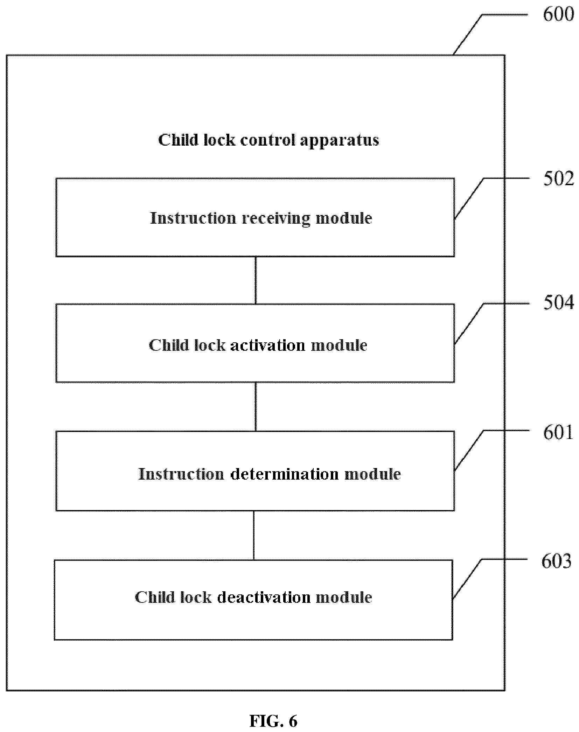

According to another embodiment of the present disclosure, referring to FIG. 6, compared to the child lock control apparatus 500, a child lock control apparatus 600 may further include: an instruction determination module 601 and a child lock deactivation module 603.

In embodiments of the present disclosure, the instruction determination module 601 is configured to receive a child lock deactivation instruction after the child lock is activated; and the child lock deactivation module 603 is configured to turn on the button response corresponding to the button according to the child lock deactivation instruction.

According to another embodiment of the present disclosure, the instruction determination module 601 may be configured to: acquire second voice information; and receive the child lock deactivation instruction when the second voice information includes second preset voice information.

According to another embodiment of the present disclosure, the instruction determination module 601 may be configured to: receive the child lock deactivation instruction sent by the mobile client if the child lock ON/OFF control in the mobile client is in the OFF state.

According to another embodiment of the present disclosure, the child lock control apparatus 600 may further include: a duration determination module, which may be configured to determine a second press duration corresponding to a second press operation in response to the second press operation on the preset button after the child lock is activated; a duration comparison module, which is configured to determine the child lock deactivation instruction corresponding to the second press operation if the second press duration is greater than the duration threshold; and a response turn-on module, which is configured to turn on button responses corresponding to buttons other than the preset button according to the child lock deactivation instruction.

According to another embodiment of the present disclosure, the instruction determination module 601 may be configured to: receive the child lock deactivation instruction in response to a press operation on the reset button.

According to another embodiment of the present disclosure, the child lock control apparatus 500 may further include: a voice playing module, which may be configured to play a warning voice in response to a press operation on the button after the child lock is activated, the warning voice indicating that the press operation is invalid.

The specific details of each module/unit in the above device have been described in detail in the embodiments of the method part, and therefore will not be described again.

In an exemplary embodiment of the present disclosure, there is also provided a computer-readable storage medium on which a program product capable of implementing the above-mentioned method in this specification is stored. In some possible embodiments, various aspects of the present disclosure may also be implemented in the form of a program product, which includes program codes. When the program product runs on a terminal device, the program codes are configured to cause the terminal device to perform the steps according to various exemplary embodiments of the present disclosure described in the above-mentioned "exemplary methods" section in this specification.

In an exemplary embodiment of the present disclosure, an electronic device capable of implementing the above method is further provided.

Those skilled in the art will understand that various aspects of the present disclosure may be implemented as systems, methods, or program products. Therefore, various aspects of the present disclosure may be specifically implemented in the following forms, namely: a complete hardware implementation, a complete software implementation (including firmware, microcode, etc.), or a hardware and software combined implementation, which may be collectively referred to herein as "circuit", "module", or "system".

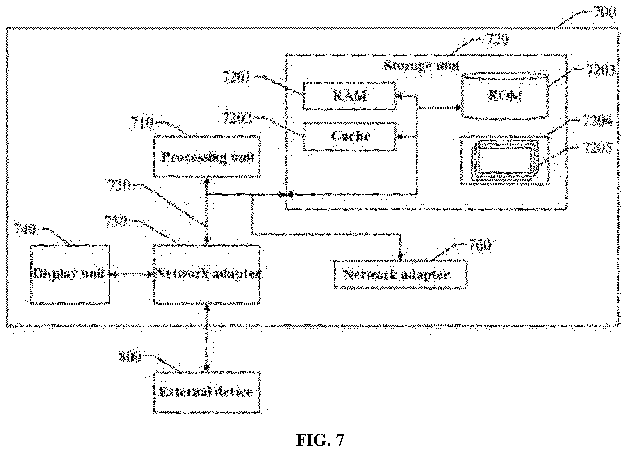

An electronic device 700 according to an implementation of the present disclosure is described below with reference to FIG. 7. The electronic device 700 shown in FIG. 7 is only an example and should not bring any limitations to the functions and usage scope of the embodiments of the present disclosure.

As shown in FIG. 7, the electronic device 700 is embodied in the form of a general-purpose computing device. The components of the electronic device 700 may include, but are not limited to: at least one processing unit 710, at least one storage unit 720, a bus 730 for connecting different system components (including the storage unit 720 and the processing unit 710), and a display unit 740.

In embodiments of the present disclosure, the storage unit stores program codes, and the program codes may be executed by the processing unit 710, so that the processing unit 710 executes the steps according to various exemplary implementations of the present disclosure described in the above-mentioned "exemplary methods" section in this specification. For example, the processing unit 710 may perform steps S201 to S203 as shown in FIG. 2.

The storage unit 720 may include a readable medium in the form of a volatile storage unit, such as a random access memory (RAM) 7201 and/or a cache 7202, and the storage unit 720 may further include a read-only memory (ROM) 7203.

The storage unit 720 may also include a program/utility tool 7204 having a set of (at least one) program modules 7205. Such program modules 7205 include, but are not limited to: an operation system, one or more application programs, other program modules, as well as program data. Each of these examples or some combination thereof may include an implementation of a network environment.

The bus 730 may be one or more buses representing several types of bus structures, including: a storage unit bus or a storage unit controller, a peripheral bus, an accelerated graphics port, a processing unit, or a local bus using any bus structure in a variety of bus structures.

The electronic device 700 may also communicate with one or more external devices 800 (such as keyboards, pointing devices, or Bluetooth devices), and may also communicate with one or more devices that enable the user to communicate with the electronic device 700, and/or may communicate with any device (e.g., router, or modem) that enables the electronic device 700 to communicate with one or more other computing devices. This communication may occur via an input/output (I/O) interface 750. Moreover, the electronic device 700 may also communicate with one or more networks (such as a local area network (LAN), a wide area network (WAN) and/or a public network such as the Internet) through a network adapter 760. As shown, the network adapter 760 communicates with other modules of the electronic device 700 via the bus 730. It should be understood that although not shown in the figure, other hardware and/or software modules may be used in conjunction with the electronic device 700, which include, but are not limited to: microcode, device drivers, redundant processing units, external disk drive arrays, RAID systems, tape drives, data backup storage systems, etc.

Through the above description of the implementations, those skilled in the art can easily understand that the exemplary embodiments described here may be implemented by software, or may be implemented by software combined with necessary hardware. Therefore, the technical solutions according to the implementations of the present disclosure may be embodied in the form of software products, and the software products may be stored in a non-volatile storage medium (which may be CD-ROM, USB disk, mobile hard disk, etc.) or on the network, and the software product includes several instructions to cause a computing device (which may be a personal computer, a server, a terminal device, a network device, etc.) to execute the methods according to embodiments of the present disclosure.

In addition, the above-mentioned drawings are only schematic illustrations of processes included in the methods according to exemplary embodiments of the present disclosure, and are not intended to be limiting. It is readily understood that the processes shown in the above figures do not indicate or limit the temporal sequence of these processes. In addition, it is also easy to understand that these processes may be performed synchronously or asynchronously in multiple modules, for example.

It should be noted that although several modules or units of a device for action execution are mentioned in the above detailed description, this division is not mandatory. In fact, according to embodiments of the present disclosure, the features and functions of two or more modules or units described above may be embodied in one module or unit. Conversely, the feature and function of one module or unit described above may be further divided so as to be embodied by multiple modules or units.

Other embodiments of the present disclosure will be readily apparent to those skilled in the art from consideration of the specification and practice of the present disclosure herein. The present disclosure is intended to cover any variations, uses, or adaptations of the present disclosure that follow the general principles of the present disclosure and include common knowledge or customary technical means in the technical field that are not disclosed in the present disclosure. It is intended that the specification and embodiments be considered as exemplary only, with the true scope and spirit of the present disclosure being indicated by the following claims.

It is to be understood that the present disclosure is not limited to the precise structures described above and illustrated in the accompanying drawings, and various modifications and changes may be made without departing from the scope thereof. The scope of the present disclosure is defined only by the appended claims.

## Claims

1. A child lock control method, applied to a robot comprising at least one button, and comprising:
receiving a child lock activation instruction when the robot is in a charging state; and
turning off a button response corresponding to the button according to the child lock activation instruction.

2. The child lock control method according to claim 1, wherein the receiving the child lock activation instruction comprises:
acquiring first voice information;
receiving the child lock activation instruction when the first voice information comprises first preset voice information;
and/or, if a child lock ON/OFF control in a mobile client is in an ON state, receiving the child lock activation instruction sent by the mobile client;
in response to a first press operation on a preset button, determining a first press duration corresponding to the first press operation;
determining the child lock activation instruction corresponding to the first press operation if the first press duration is greater than a duration threshold;
and/or, the turning off the button response corresponding to the button according to the child lock activation instruction comprises:
turning off button responses corresponding to buttons other than the preset button according to the child lock activation instruction.

3. The child lock control method according to claim 2, wherein the child lock control method further comprises:
receiving a child lock deactivation instruction after the child lock is activated; and
turning on the button response corresponding to the button according to the child lock deactivation instruction.

4. The child lock control method according to claim 3, wherein the receiving the child lock deactivation instruction comprises:
acquiring second voice information;
receiving the child lock deactivation instruction when the second voice information comprises second preset voice information;
and/or, if the child lock ON/OFF control in the mobile client is in an OFF state, receiving the child lock deactivation instruction sent by the mobile client.

5. The child lock control method according to claim 4, wherein the child lock control method further comprises:
after the child lock is activated, in response to a second press operation on the preset button, determining a second press duration corresponding to the second press operation;
determining the child lock deactivation instruction corresponding to the second press operation if the second press duration is greater than the duration threshold;
turning on button responses corresponding to buttons other than the preset button according to the child lock deactivation instruction;
and/or, the robot comprises a reset button, and the receiving the child lock deactivation instruction comprises:
receiving the child lock deactivation instruction in response to a press operation on the reset button.

6. The child lock control method according to claim 1 or 2, wherein the child lock control method further comprises:
after the child lock is activated, in response to a press operation on the button, playing a warning voice indicating that the press operation is invalid.

7. A child lock control apparatus, applied to a robot comprising at least one button, the child lock control apparatus comprising:
an instruction receiving module, configured to receive a child lock activation instruction when the robot is in a charging state; and
a child lock activation module, configured to turn off a button response corresponding to the button according to the child lock activation instruction.

8. The child lock control apparatus according to claim 7, wherein the instruction receiving module is configured to:
acquire first voice information;
receive the child lock activation instruction when the first voice information comprises first preset voice information; and/or
if a child lock ON/OFF control in a mobile client is in an ON state, receive the child lock activation instruction sent by the mobile client.

9. The child lock control apparatus according to claim 7, wherein
the robot comprises a preset button,
the preset button is configured to activate or deactivate a child lock function, and
the instruction receiving module is configured to:
in response to a first press operation on the preset button, determine a first press duration corresponding to the first press operation; and
determine the child lock activation instruction corresponding to the first press operation if the first press duration is greater than a duration threshold.

10. The child lock control apparatus according to claim 9, wherein the child lock activation module is configured to:
turn off button responses corresponding to buttons other than the preset button according to the child lock activation instruction.

11. The child lock control apparatus according to claim 8, wherein the child lock control apparatus further comprises:
an instruction determination module, configured to receive a child lock deactivation instruction after the child lock is activated; and
a child lock deactivation module, configured to turn on the button response corresponding to the button according to the child lock deactivation instruction.

12. The child lock control apparatus according to claim 11, wherein the instruction determination module is configured to:
acquire second voice information; and
receive the child lock deactivation instruction when the second voice information comprises second preset voice information.

13. The child lock control apparatus according to claim 11, wherein the instruction determination module is configured to:
if the child lock ON/OFF control in the mobile client is in an OFF state, receive the child lock deactivation instruction sent by the mobile client.

14. The child lock control apparatus according to claim 13, wherein the child lock control apparatus further comprises:
a duration determination module, configured to determine a second press duration corresponding to a second press operation in response to the second press operation on the preset button after the child lock is activated;
a duration comparison module, configured to determine the child lock deactivation instruction corresponding to the second press operation if the second press duration is greater than the duration threshold; and
a response turn-on module, configured to turn on button responses corresponding to buttons other than the preset button according to the child lock deactivation instruction.

15. The child lock control apparatus according to claim 13, wherein the instruction determination module is configured to: receive the child lock deactivation instruction in response to a press operation on a reset button.

16. The child lock control apparatus according to claim 7 or 8, wherein the child lock control apparatus further comprises:
a voice playing module, configured to play a warning voice in response to a press operation on the button after the child lock is activated, wherein the warning voice indicates that the press operation is invalid.

17. A robot, comprising the child lock control apparatus according to any one of claims 7 to 16 and at least one button.

18. A computer-readable storage medium, on which a computer program is stored, wherein the computer program, when executed by a processor, causes the child lock control method according to any one of claims 1 to 6 to be implemented.

19. An electronic device, comprising:
one or more processors; and
a storage apparatus, configured to store one or more programs, wherein
the one or more programs, when executed by the one or more processors, cause the one or more processors to implement the child lock control method according to any one of claims 1 to 6.
